(19) Europäisches Patentamt
European Patent Office
Office européen des brevets

(11) **EP 3 959 098 B1**

(12) **EUROPÄISCHE PATENTSCHRIFT**

(45) Veröffentlichungstag und Bekanntmachung des Hinweises auf die Patenterteilung:
**30.04.2025  Patentblatt 2025/18**

(21) Anmeldenummer: **20716395.7**

(22) Anmeldetag: **19.03.2020**

(51) Internationale Patentklassifikation (IPC):
*G02B 27/01* (2006.01)   *B60K 35/00* (2024.01)
*B60K 35/10* (2024.01)   *B60K 35/23* (2024.01)
*B60K 35/28* (2024.01)

(52) Gemeinsame Patentklassifikation (CPC):
**B60K 35/10; B60K 35/50; B60K 35/90;**
**G02B 27/0101;** B60K 35/28; B60K 2360/149;
B60K 2360/168; B60K 2360/334; B60K 2360/349;
G02B 2027/0118; G02B 2027/0138; G02B 2027/014

(86) Internationale Anmeldenummer:
**PCT/EP2020/057651**

(87) Internationale Veröffentlichungsnummer:
**WO 2020/216537 (29.10.2020 Gazette 2020/44)**

(54) **VORRICHTUNG UND VERFAHREN ZUR PROJEKTION VON BILDDATEN AUF EINE PROJEKTIONSFLÄCHE EINER FAHRZEUGSCHEIBE**

DEVICE AND METHOD FOR PROJECTING IMAGE DATA ONTO A PROJECTION SURFACE OF A VEHICLE WINDOW

DISPOSITIF ET PROCÉDÉ POUR PROJETER DES DONNÉES D'IMAGE SUR UNE SURFACE DE PROJECTION D'UNE FENÊTRE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2019  DE 102019003039**

(43) Veröffentlichungstag der Anmeldung:
**02.03.2022  Patentblatt 2022/09**

(73) Patentinhaber: **Mercedes-Benz Group AG**
**70372 Stuttgart (DE)**

(72) Erfinder:
• **REICHERT, Steffen**
**75378 Bad Liebenzell (DE)**
• **SENS, Oliver**
**71034 Böblingen (DE)**
• **AMIRALIS, Zane**
**72202 Nagold (DE)**

(74) Vertreter: **Novagraaf Group**
**Chemin de l'Echo 3**
**1213 Onex / Geneva (CH)**

(56) Entgegenhaltungen:
DE-A1- 102012 204 303    DE-A1- 102015 215 180
DE-A1- 102016 223 908

**Beschreibung**

Die Erfindung betrifft eine Vorrichtung zur Projektion von Bilddaten auf eine Projektionsfläche einer Fahrzeugscheibe eines Fahrzeugs. Die Erfindung betrifft weiterhin ein Verfahren zum Betrieb einer ebensolchen Vorrichtung sowie ein Fahrzeug mit einer ebensolchen Vorrichtung.

Vorrichtungen zur Projektion von Bilddaten auf eine Projektionsfläche einer Fahrzeugscheibe sind im Stand der Technik als sogenannte: "Head-Up-Displays, HUD" bekannt. Typischerweise werden derartige Vorrichtungen zur Projektion von Navigationsdaten, Fahrzeug-Betriebsdaten und von Multimediadaten, welche Multimedia-Anwendungen in einem Fahrzeug steuern, genutzt. Typischerweise sind die projizierten Bilddaten nur für den Fahrer erkennbar.

Bei den im Stand der Technik bekannten Projektionssystemen (HUD's) werden die Bilddaten auf eine Projektionsfläche einer Fahrzeugscheibe projiziert. Dabei kann die Fahrzeugscheibe eine beliebige Scheibe eines Fahrzeugs sein, beispielsweise eine Frontscheibe, eine Seitenscheibe, ... etc. Die jeweilige Fahrzeugscheibe sowie die Projektionsfläche der Fahrzeugscheibe sind transparent, d.h. durchsichtig. Bei der Projektion der Bilddaten werden von einem Projektor Bildinhalte durch Lichtstrahlen auf die Projektionsfläche projiziert. An der Projektionsfläche werden die Lichtstrahlen in Richtung eines Betrachters reflektiert, sodass die Bildinhalte für den Betrachter sichtbar werden.

Weiterhin sind Projektionssysteme bekannt, die auf zwei unterschiedliche Projektionsflächen einer Fahrzeugscheibe unterschiedliche Bilddaten projizieren.

So ist beispielsweise aus der Druckschrift DE 10 2006 050 016 A1 eine Anzeigevorrichtung in einem Fahrzeug bekannt, wobei das Fahrzeug eine Sensoranordnung zur Bestimmung der Blickrichtung eines Fahrers des Fahrzeugs aufweist und die Anzeigevorrichtung zwei getrennte Projektionsflächen auf der Fahrzeugscheibe aufweist. Dabei wird die Anzeigevorrichtung von einer Anzeigesteuerung derart gesteuert, dass zur Anzeige einer das Fahrzeug betreffende Information in Abhängigkeit der Blickrichtung des Fahrers entweder auf der ersten Projektionsfläche oder der zweiten Projektionsfläche erfolgt.

Die Darstellung von bewegten Bildern, bspw. Videos, im Sichtbereich des Fahrers ist wegen der Ablenkung des Fahrers rechtlich nicht gestattet.

Im Stand der Technik sind weiterhin sogenannte "Multimedia-HUD's" bekannt, die es erlauben, für Fahrer und Beifahrer individualisierte Medieninhalte darzustellen, ohne dass dies für den jeweils anderen einsehbar ist. Diese Systeme sind derzeit insbesondere besonders für den Beifahrer interessant, wobei der Fahrer nicht durch die nur für den Beifahrer einsehbaren Bildinhalte abgelenkt bzw. gestört wird.

In zukünftigen autonom fahrenden Fahrzeugen werden derartige Projektionssysteme sehr wahrscheinlich auch genutzt, um für den Fahrer bewegte Bildinhalte zu projizieren, sofern sich das Fahrzeug autonom bewegt. Durch die jeweils individualisiert projizierten Bildinhalte ermöglicht ein solches Multimedia-HUD den individuellen Konsum von Bilddaten, Bilddatenströmen in Fahrzeugen, Bussen, Taxis oder anderen öffentlichen Verkehrsmitteln.

Die DE 10 2016 223908 A1 offenbart ein Verfahren zum Einstellen einer Helligkeit eines virtuellen Anzeigebildes eines Head-up-Displays. Entsprechend dem Verfahren wird ein Helligkeitsprofil eines Verdeckungsbilds erfasst und die Helligkeiten mindestens eines Bildbereichs des Projektionsbilds abhängig von dem Helligkeitsprofil des Verdeckungsbilds angepasst.

Aufgabe der vorliegenden Erfindung ist es, eine verbesserte Vorrichtung zur Projektion von Bilddaten auf eine Projektionsfläche einer Fahrzeugscheibe anzugeben, die insbesondere einen störungsfreien und nicht ermüdenden Genuss der projizierten Bilddaten ermöglicht.

Die Erfindung basiert auf folgender Erkenntnis der Erfinder.

Bei einer Projektion von Bilddaten auf eine Projektionsfläche einer Fahrzeugscheibe mit einem im Stand der Technik bekannten Projektionssystem, entsteht der Bildkontrast durch die Helligkeitsdifferenz zwischen hellen und dunklen Bildpunktinhalten. Der dunkelste Bildinhalt sei vorliegend "rein schwarz". Bei der Projektion des Bildinhalts "rein schwarz" auf ein Bildpixel (Bildpunkt) der Projektionsfläche wird daher vom Projektor kein Lichtstrahl ausgesandt und demzufolge in diesem Bildpunkt (Bildpixel) auch kein von dem Projektionssystem ausgehender Lichtstrahl in Richtung Betrachter reflektiert. Dieser Bildpunkt der Projektionsfläche besitzt daher grundsätzlich den Helligkeits-, Farb- bzw. Tonwert der Projektionsfläche.

Die Folge ist, da die Projektionsfläche transparent, d.h. durchsichtig ist, dass der Betrachter in diesem Bildpunkt die in Blickrichtung des Betrachters hinter dem Bildpunkt liegende Umgebung des Fahrzeugs wahrnimmt, so dass dieser Bildpunkt anstelle von "rein schwarz" den Helligkeits-, Farb- bzw. Tonwert der entsprechenden Umgebung annimmt. Da sich das Fahrzeug typischerweise bewegt, ändert sich zudem die entsprechende Umgebung ständig, was ein Betrachter der Bilddaten als störend empfindet.

Ein ermüdungsfreies Betrachten der auf die Projektionsfläche projizierten Bilddaten erfordert weiterhin, dass die Fokussierung der Augen des Betrachters möglichst auf der Projektionsfläche gehalten wird. Werden Bilddaten mit einem großen Anteil dunkler Bildinhalte auf die Projektionsfläche projiziert, dann ergibt sich auf der Projektionsfläche ein entsprechend großer transparenter Bereich, auf dem der Betrachter die in Blickrichtung hinter der Projektionsfläche liegende Umgebung wahrnimmt. In diesem Fall kommt es dazu, dass sich die Augen des Betrachters wechselnd auf die

**EP 3 959 098 B1**

Projektionsfläche (im Fall heller Bildinhalte) und die in Blickrichtung hinter der Projektionsfläche liegende Umgebung (im Fall dunkler Bildinhalte) fokussieren. Dieser Fokuswechsel ist störend und ermüdend für den Betrachter. Dieser Effekt verstärkt sich bei hellen Fahrzeugumgebungen, während er in dunklen Fahrzeugumgebungen verringert ist.

Ein erster Aspekt der Erfindung betrifft eine Vorrichtung zur Projektion von Bilddaten auf eine Projektionsfläche einer Fahrzeugscheibe eines Fahrzeugs, umfassend: eine Schnittstelle zur Bereitstellung der Bilddaten BD1(t), eine mit der Schnittstelle verbundene Bilddatenbearbeitungseinheit zur Erzeugung von Bilddaten BD2(t) aus den Bilddaten BD1(t), einen mit der Bilddatenbearbeitungseinheit verbundenen Helligkeitssensor zur Erfassung einer Umgebungshelligkeit H(t), und eine mit der Bildbearbeitungseinheit verbundene Projektionseinheit zur Projektion der Bilddaten BD2(t) auf die Projektionsfläche der Fahrzeugsscheibe, wobei die Bilddatenverarbeitungseinheit derart ausgeführt und eingerichtet ist, dass abhängig von der erfassten Umgebungshelligkeit H(t) für die Erzeugung der Bilddaten BD2(t) aus den Bilddaten BD1(t) eine Gradationskurve GK(H(t)) derart vorgegeben wird, so dass dunkle unterhalb eines vorgegebenen Farbhelligkeitsgrenzwerts im Vergleich zu oberhalb des Farbhelligkeitsgrenzwerts liegenden Bildbereichen in den Bilddaten BD2(t) gegenüber den Bilddaten BD1(t) bezüglich ihrer Farb- oder Graustufenspektren aufgehellt sind, wobei ein Maß der Aufhellung der dunklen Bildbereiche in den Bilddaten BD2(t) mit zunehmender Umgebungshelligkeit H(t) steigt.

Die Gradationskurve GK(H(t)) definiert vorliegend eine eineindeutige Abbildung f von Helligkeitswerten in [%] eines ein Farb- oder Graustufenspektrum repräsentierenden Bereichs SPEC := [0% ... 100%] auf denselben Bereich SPEC:

$$f : \begin{cases} SPEC \rightarrow SPEC \\ \%IN \rightarrow \%OUT \end{cases}$$

mit:

%IN:      Eingangshelligkeitswerte der bereitgestellten Bilddaten BD1(t)
%OUT      Helligkeitswerte der Bilddaten BD2(t)
0%        minimale Helligkeit = 0 = "rein schwarz"
100%:     maximale Helligkeit.

Das heißt, der Definitionsbereich SPEC der Funktion f ist identisch mit dem Zielbereich SPEC der Funktion f. Der Bereich SPEC repräsentiert Helligkeitswerte oder Farbwerte oder Tonwerte von Bildpixeln der jeweiligen Bilddaten BD1(t) und BD2(t).

Die Gradationskurve GK(H(t)) wird vorliegend in Abhängigkeit der ermittelten Umgebungshelligkeit H(t) verändert.

Weiterhin werden vorliegend unter dem Begriff "dunkle Bildbereiche" vorteilhaft diejenigen Bildbereiche der Bilddaten BD1 verstanden, deren Bildpixel Helligkeitswerte in [%] im Bereich zwischen 0% und 50%, insbesondere zwischen 0% und 40 % oder zwischen 0% und 30 % oder zwischen 0% und 20 % oder zwischen 0% und 15% aufweisen.

Mit anderen Worten liegen die dunklen Bildbereiche unter einem vorgegeben Schwellwert der Helligkeit ihrer Farb- oder Graustufenspektren wie beispielsweise 50%, 40%, 30%, 20% oder 15%. Die gegenüber den genannten Helligkeitswerten komplementäre, d.h. über dem vorgegeben Schwellwert liegenden Helligkeitswerte der Grau- und Farbwerte sind damit als "helle Bildbereiche" der Bilddaten BD1(t) zu bezeichnen und werden in den Bilddaten BD2(t) ohne Aufhellung oder zumindest relativ zu den dunklen Bildbereichen mit einer geringeren Aufhellung ausgegeben. Neben der Aufhellung der Grau- und Farbwerte kann zusätzlich die Lichtintensität in Abhängigkeit der Umgebungshelligkeit angepasst werden, beispielweise wird bei dunkler Umgebung wie einer Tunnelfahrt die Intensität reduziert und bei einer hellen Umgebung für eine bessere Erkennbarkeit auf der Projektionsfläche erhöht. Die Lichtintensität wird durch Veränderung einer in Lumen bemessenen Helligkeit der durch die Lichtquelle der Projektionseinheit ausgestrahlten Farb- oder Graustufenspektren verändert.

Die Gradationskurve GK(H(t)) wird vorteilhaft in Abhängigkeit der ermittelten Umgebungshelligkeit H(t) derart geändert, dass der Eingangshelligkeitswert %IN = 0 := "rein schwarz" der bereitgestellten Bilddaten BD1(t) auf einen Helligkeits(ziel)wert %OUT(%IN=0) > 0 der Bilddaten BD2(t) abgebildet wird. Dabei nimmt der Betrag |%OUT(%IN=0)| des Helligkeits(ziel)werts bei zunehmender Umgebungshelligkeit H(t) zu bzw. nimmt bei abnehmender Umgebungshelligkeit H(t) ab.

Ist die Umgebungshelligkeit (bspw. während der Nacht) sehr gering (ein entsprechender Helligkeitsgrenzwert GW kann vorgegeben werden), dann wird der Eingangshelligkeitswert %IN = 0 (= "rein schwarz") der bereitgestellten Bilddaten BD1(t) vorteilhaft auf einen Helligkeits(ziel)wert %OUT(%IN=0) = 0 := "rein schwarz" der Bilddaten BD2(t) abgebildet. Vorteilhaft entspricht die Gradationskurve GK(H(t)) in diesem Fall bei einer Eintragung in ein lineares rechtwinkliges Koordinatensystem der Diagonale zwischen den Punkten: (%IN=0, %OUT=0) und (%IN=100, %

**EP 3 959 098 B1**

OUT=100).

Bei einer Umgebungshelligkeit H(t) > 0 bzw. H(t) > GW verläuft die Gradationskurve GK(H(t)) dann beginnend vom einem Punkt: (%IN=0, %OUT > 0) stetig in Richtung ihres Endpunktes (%IN = 100, %OUT = 100). Sofern die Gradationskurve GK in einem linearen rechtwinkligen Koordinatensystem aufgetragen wird, liegt die Gradationskurve GK(H(t)) vorteilhaft für den Eingangshelligkeitswertebereich $\%IN_{B1}$ von [0% bis 50%] oberhalb einer die Punkte: (%IN=0, %OUT =0) und (%IN=100, %OUT =100) verbindenden Diagonale und ist vorteilhaft für den Eingangshelligkeitswertebereich $\%IN_{B2}$ von ]50% bis 100%] identisch mit der die Punkte: (%IN=50, %OUT =50) und (%IN=100, %OUT =100) verbindenden Diagonale.

Erfindungsgemäß hängt die "Aufhellung" bzw. das "Maß der Aufhellung" der dunklen Bildbereiche in den Bilddaten BD2(t) von der ermittelten Umgebungshelligkeit H(t) ab. Dabei steigt das Maß der Aufhellung der dunklen Bildbereiche mit zunehmender Umgebungshelligkeit H(t) an und nimmt entsprechend abnehmender Umgebungshelligkeit H(t) ab. Das Maß der Aufhellung dunkler Bildbereiche wird demzufolge abhängig von der ermittelten Umgebungshelligkeit H(t) in beide Richtungen angepasst. Das bedeutet insbesondere, dass die Gradationskurve GK(H(t)) abhängig von der ermittelten Umgebungshelligkeit H(t) entsprechend angepasst wird.

Eine vorteilhafte Weiterbildung der vorgeschlagenen Vorrichtung zeichnet sich dadurch aus, dass weiterhin ein mit der Bilddatenbearbeitungseinheit verbundenes System zur Erkennung eines aktuellen Blickwinkelbereichs BWB(t) zumindest eines Insassen des Fahrzeugs vorhanden ist, wobei die Bilddatenverarbeitungseinheit derart ausgeführt und eingerichtet ist, dass nur diejenigen dunklen Bildbereiche in den Bilddaten BD2(t) aufgehellt werden, welche bei ihrer Projektion auf die Projektionsfläche der Fahrzeugscheibe im Blickwinkelbereich BWB(t) liegen. Ein Insasse des Fahrzeugs kann insbesondere der Fahrer oder der Beifahrer sein. Vorteilhaft ist die Fahrzeugscheibe eine Frontscheibe oder eine Seitenscheibe des Fahrzeugs.

Vorteilhaft ist der Helligkeitssensor ein Kamerasensor. Vorteilhaft hat der Helligkeitssensor einen Erfassungsbereich, der eine Helligkeit H(t) im Wesentlichen einer für einen Insassen durch die Projektionsfläche hindurch wahrnehmbaren Umgebung des Fahrzeugs erfasst. Damit wird insbesondere die Helligkeit H(t) desjenigen Umgebungsausschnitts gemessen, die für den vorbeschriebenen bei einem Betrachter eintretenden Defokussierungseffekt maßgeblich ist.

Eine vorteilhafte Weiterbildung der vorgeschlagenen Vorrichtung zeichnet sich dadurch aus, dass die Bilddatenverarbeitungseinheit derart ausgeführt und eingerichtet ist, dass bei einer Änderung $\Delta H(t)$ der ermittelten Umgebungshelligkeit H(t) eine Aufhellung der dunklen Bildbereiche in den Bilddaten BD2(t) mit einer von $\Delta H(t)$ abhängigen vorgegebenen Zeitverzögerung $\Delta t(\Delta H(t))$ erfolgt. Insbesondere wird bei einer Änderung $\Delta H(t)$ der ermittelten Umgebungshelligkeit H(t) die Gradationskurve GK(H(t)) mit einer von $\Delta H(t)$ abhängigen vorgegebenen Zeitverzögerung $\Delta t(\Delta H(t))$ verändert. Durch die Zeitverzögerung $\Delta t(\Delta H(t))$ erfolgt eine Veränderung eines Maßes der Aufhellung grundsätzlich erst verzögert.

Wenn sich beispielsweise zu einem Zeitpunkt $t_0$ die Umgebungshelligkeit $H(t_0)$ um 1000 lux erhöht und sich als entsprechende Zeitverzögerung $\Delta t(\Delta H(t))$ = 2 sec ergibt, so würde eine Änderung des Maßes der Aufhellung bzw. einer Änderung der Gradationskurve $\Delta GK(H(t))$ erst nach 2 Sekunden beginnen oder wirksam werden. Ändert sich innerhalb der 2 Sekunden die Umgebungshelligkeit H(t) um -1000 lux, d.h. zurück auf den Ausgangswert, so erfolgt vorteilhaft keinerlei Änderung des Maßes der Aufhellung bzw. der zum Zeitpunkt $t_0$ zu Grunde liegenden Gradationskurve $GK(H(t_0))$. Vorteilhaft ist die Zeitverzögerung $\Delta t(\Delta H(t))$ für große Änderungen $\Delta H(t)$ der Umgebungshelligkeit H(t) geringer als für kleine Änderungen $\Delta H(t)$ der Umgebungshelligkeit H(t).

Eine vorteilhafte Weiterbildung der vorgeschlagenen Vorrichtung zeichnet sich dadurch aus, dass die Bilddatenverarbeitungseinheit derart ausgeführt und eingerichtet ist, dass bei einer Änderung $\Delta H(t)$ der ermittelten Umgebungshelligkeit H(t) eine Änderung der Aufhellung der dunklen Bildbereiche in den Bilddaten BD2(t) bzw. eine Änderung der Gradationskurve GK(H(t)) gemäß einer vorgegeben stetigen Funktion HYS(t) erfolgt. Damit werden jegliche sprunghaften Änderungen bei der Projektion der Bilddaten BD2(t) vermieden.

Vorteilhaft ist die stetige Funktion HYS(t) abhängig vom Vorzeichen der Änderung $\Delta H(t)$ der Helligkeit H(t), wobei sich bei einem positiven $\Delta H(t)$ die Aufhellung der dunklen Bildbereiche gemäß einer vorgegeben Funktion HYS1(t) ändert und bei einem negativen $\Delta H(t)$ die Aufhellung der dunklen Bildbereiche gemäß einer vorgegeben Funktion HYS2(t) ändert. Dies ermöglicht die Vorgabe einer Funktion für eine Zunahme der ermittelten Umgebungshelligkeit H(t) und einer anderen Funktion für eine Abnahme der ermittelten Umgebungshelligkeit H(t).

Besonders vorteilhaft bildet sich die Funktion HYS(t) als ein Hysterese-Verhalten, insbesondere ein zeitverzögertes Hysterese-Verhalten bei der Änderung der Aufhellung dunkler Bildbereiche in den Bilddaten BD2(t) ab.

Ein weiterer Aspekt der vorliegenden Erfindung betrifft ein Fahrzeug, insbesondere ein Straßenfahrzeug, ein Schienenfahrzeug, ein Wasserfahrzeug oder ein Luftfahrzeug, mit einer Vorrichtung, wie vorstehend beschrieben.

Ein letzter Aspekt der vorliegenden Erfindung betrifft ein Verfahren zum Betrieb einer Vorrichtung zur Projektion von Bilddaten auf eine Projektionsfläche einer Fahrzeugscheibe eines Fahrzeugs, mit folgenden Schritten:

• Bereitstellen von Bilddaten BD1(t) an einer Schnittstelle,

- Erfassen einer Umgebungshelligkeit H(t) mit einem Helligkeitssensor,
- Erzeugen von Bilddaten BD2(t) aus den Bilddaten BD1(t) mittels einer mit der Schnittstelle verbundenen Bilddatenbearbeitungseinheit und,
- Projizieren der Bilddaten BD2(t) auf die Projektionsfläche der Fahrzeugsscheibe mittels einer mit der Bildbearbeitungseinheit verbundenen Projektionseinheit,

wobei die Bilddatenverarbeitungseinheit abhängig von der erfassten Umgebungshelligkeit H(t) für die Erzeugung der Bilddaten BD2(t) aus den Bilddaten BD1(t) eine Gradationskurve GK derart vorgibt, so dass dunkle unterhalb eines vorgegebenen Farbhelligkeitsgrenzwerts im Vergleich zu oberhalb des Farbhelligkeitsgrenzwerts liegenden Bildbereichen in den Bilddaten BD2(t) gegenüber den Bilddaten BD1(t) bezüglich ihrer Farb- oder Graustufenspektren aufgehellt werden, wobei ein Maß der Aufhellung der dunklen Bildbereiche in den Bilddaten BD2(t) mit zunehmender Umgebungshelligkeit H(t) steigt.

Vorteilhaft umfasst das vorgeschlagene Verfahren den Schritt: Ermitteln eines aktuellen Blickwinkelbereichs BWB(t) zumindest eines Insassen des Fahrzeugs durch ein mit der Bilddatenbearbeitungseinheit verbundenes System, wobei die Bilddatenverarbeitungseinheit nur diejenigen dunklen Bildbereiche in den Bilddaten BD2(t) aufhellt, welche bei ihrer Projektion auf die Projektionsfläche der Fahrzeugscheibe im Blickwinkelbereich BWB(t) liegen.

Eine vorteilhafte Weiterbildung des vorgeschlagenen Verfahrens zeichnet sich dadurch aus, dass der Helligkeitssensor einen Erfassungsbereich hat, und der Erfassungsbereich eine Helligkeit H(t) im Wesentlichen einer für einen Insassen durch die Projektionsfläche hindurch wahrnehmbaren Umgebung des Fahrzeugs erfasst.

Vorteilhaft führt die Bilddatenverarbeitungseinheit bei einer Änderung ΔH(t) der ermittelten Umgebungshelligkeit H(t) eine Aufhellung der dunklen Bildbereiche in den Bilddaten BD2(t) mit einer von ΔH(t) abhängigen vorgegebenen Zeitverzögerung Δt(ΔH(t)) aus.

Vorteilhaft führt die Bilddatenverarbeitungseinheit bei einer Änderung ΔH(t) der ermittelten Umgebungshelligkeit H(t) eine Änderung des Maßes der Aufhellung der dunklen Bildbereiche in den Bilddaten BD2(t) gemäß einer vorgegeben stetigen Funktion HYS(t) aus. Vorteilhaft ist die stetige Funktion HYS(t) abhängig vom Vorzeichen der Änderung ΔH(t) der Umgebungshelligkeit H(t), wobei sich bei einem positiven ΔH(t) die Aufhellung der dunklen Bildbereiche gemäß einer vorgegeben Funktion HYS1(t) ändert und bei einem negativen ΔH(t) die Aufhellung der dunklen Bildbereiche sich gemäß einer vorgegeben Funktion HYS2(t) ändert.

Besonders vorteilhaft bildet die Funktion HYS(t) ein Hysterese-Verhalten, insbesondere ein zeitverzögertes Hysterese-Verhalten bei der Änderung der Aufhellung dunkler Bildbereiche in den Bilddaten BD2(t) ab.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1    einen stark schematisierten Aufbau einer vorgeschlagenen Vorrichtung,
Fig. 2    ein Beispiel einer vorgeschlagenen Gradationskurve, und
Fig. 3    ein stark schematisiertes Ablaufschema eines vorgeschlagenen Verfahrens.

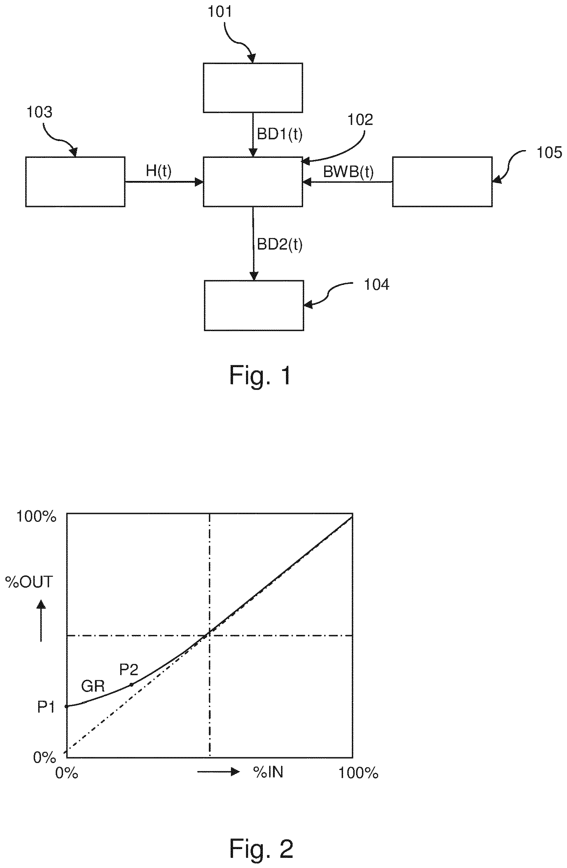

Fig. 1 zeigt einen stark schematisierten Aufbau einer vorgeschlagenen Vorrichtung zur Projektion von Bilddaten auf eine Projektionsfläche einer Fahrzeugfrontscheibe eines Fahrzeugs, umfassend: eine Schnittstelle 101 zur Bereitstellung der Bilddaten BD1(t), eine mit der Schnittstelle 101 verbundene Bilddatenbearbeitungseinheit 102 zur Erzeugung von Bilddaten BD2(t) aus den Bilddaten BD1(t), einen mit der Bilddatenbearbeitungseinheit 102 verbundenen Helligkeitssensor 103 zur Erfassung einer Umgebungshelligkeit H(t), und eine mit der Bildbearbeitungseinheit 102 verbundene Projektionseinheit 104 zur Projektion der Bilddaten BD2(t) auf die Projektionsfläche der Fahrzeugfrontscheibe.

Die Bilddatenverarbeitungseinheit 102 ist vorliegend derart ausgeführt und eingerichtet, dass abhängig von der erfassten Umgebungshelligkeit H(t) für die Erzeugung der Bilddaten BD2(t) aus den Bilddaten BD1(t) eine Gradationskurve GK(H(t)), derart vorgegeben wird, so dass dunkle unterhalb eines vorgegebenen Farbhelligkeitsgrenzwerts im Vergleich zu oberhalb des Farbhelligkeitsgrenzwerts liegenden Bildbereichen in den Bilddaten BD2(t) gegenüber den Bilddaten BD1(t) aufgehellt sind, wobei ein Maß der Aufhellung der dunklen Bildbereiche in den Bilddaten BD2(t) mit zunehmender Umgebungshelligkeit H(t) steigt. Das bedeutet insbesondere, dass dunklen Bildbereiche in den Bilddaten BD2(t) bei einer zunehmenden Umgebungshelligkeit H(t) mit einer größeren Helligkeit dargestellt werden und bei abnehmender Umgebungshelligkeit H(t) mit einer geringeren Helligkeit dargestellt werden.

Die Vorrichtung umfasst weiterhin ein mit der Bildverarbeitungseinheit verbundenes System 105 zum Ermitteln eines aktuellen Blickwinkelbereichs BWB(t) zumindest eines Insassen des Fahrzeugs (Fahrer und/oder Beifahrer), wobei die Bilddatenverarbeitungseinheit nur diejenigen dunklen Bildbereiche in den Bilddaten BD2(t) aufhellt, welche bei ihrer Projektion auf die Projektionsfläche der Fahrzeugscheibe im Blickwinkelbereich BWB(t) liegen.

Der Helligkeitssensor hat vorzugsweise einen Erfassungsbereich, der eine Helligkeit H(t) im Wesentlichen einer für einen Insassen durch die Projektionsfläche hindurch wahrnehmbaren Umgebung des Fahrzeugs erfasst.

Die Bilddatenverarbeitungseinheit ist weiterhin derart ausgeführt und eingerichtet, dass bei einer Änderung $\Delta H(t)$ der ermittelten Umgebungshelligkeit $H(t)$ eine Aufhellung der dunklen Bildbereiche in den Bilddaten $BD2(t)$ mit einer von $\Delta H(t)$ abhängigen vorgegebenen Zeitverzögerung $\Delta t(\Delta H(t))$ ausgeführt wird.

Fig. 2 zeigt ein Beispiel einer vorgeschlagenen Gradationskurve $GK(H(t))$. Grundlage für dieses Beispiel sei, dass ein Helligkeitssensor am Fahrzeug die Umgebungshelligkeit $H(t)$ zwischen 1 und 100.000 lm/qm ermittelt. Abhängig von der Umgebungshelligkeit $H(t)$ wird die Gradationskurve $GK(H(t))$ ermittelt. Diesem Beispiel liegt ein Algorithmus zu Grunde, der zwei Punkte P1 und P2 einer Gradationskurve $GK(H(t))$ ermittelt. Der Punkt P1 bestimmt in dem dargestellten Diagramm eine von der Umgebungshelligkeit $H(t)$ abhängige Zuordnung von %IN = 0 → %OUT(%IN=0), wobei gilt: %OUT(%IN=0) $\geq$ 0, und definiert damit eine Anhebung (Aufhellung) der Bilddaten für den Eingangswert %IN=0. Die Zuordnung: %IN = 0 → %OUT(%IN=0) = 0 gilt vorliegend nur ausnahmsweise für den Fall, dass die ermittelte Umgebungshelligkeit $H(t)$ geringer ist, als ein für eine dunkle Nacht gegebener Grenzwert GW einer Umgebung Helligkeit.

Der Punkt P2 bestimmt vorliegend eine von der Umgebungshelligkeit $H(t)$ abhängige Zuordnung von:

$$\text{\%IN} = 25 \rightarrow \text{\%OUT(\%IN=25)} = |\text{\%OUT(\%IN=0)}| + |\text{\%OUT(\%IN=0)}/2|$$

und definiert damit eine von der Umgebungshelligkeit $H(t)$ abhängige Anhebung (Aufhellung) der Bilddaten für den Eingangswert %IN = 25. Der Punkt P2 dient zur Bestimmung des weiteren Verlaufs der Gradationskurve $GK(H(t))$. Die dargestellte Gradationskurve $GK(H(t))$ schmiegt sich ab dem Punkt (%IN=50, %OUT=50) an die gestrichelte Diagonale an und verläuft weiter in Richtung dem Endpunkt der Gradationskurve (%IN=100, %OUT=100).

Ändert sich die erfasste Umgebungshelligkeit $H(t)$ so wird eine entsprechend geänderte Gradationskurve $GK(H(t))$ ermittelt. Nimmt die ermittelte Umgebungshelligkeit $H(t)$ ab, so wird in diesem Beispiel der Wert %OUT(%IN=0) des Punktes P1 und entsprechend der Wert %OUT(%IN=25) verringert. Nimmt die ermittelte Umgebungshelligkeit $H(t)$ unter vorgegebenen Grenzwert GW ab, so entspricht die Gradationskurve $GK(H(t))$ der in dem Diagramm als strichpunktierte Diagonale gezeigten Kurve.

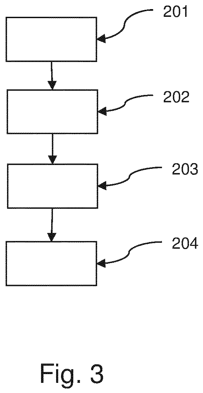

Fig. 3 zeigt ein stark schematisiertes Ablaufschema eines vorgeschlagenen Verfahrens zum Betrieb einer Vorrichtung zur Projektion von Bilddaten auf eine Projektionsfläche einer Fahrzeugscheibe eines Fahrzeugs, mit folgenden Schritten: Bereitstellen 201 von Bilddaten $BD1(t)$ an einer Schnittstelle 101, Erfassen 202 einer Umgebungshelligkeit $H(t)$ mit einem Helligkeitssensor 103, Erzeugen 203 von Bilddaten $BD2(t)$ aus den Bilddaten $BD1(t)$ mittels einer mit der Schnittstelle 101 verbundenen Bilddatenbearbeitungseinheit 102 und, Projizieren 204 der Bilddaten $BD2(t)$ auf die Projektionsfläche der Fahrzeugscheibe mittels einer mit der Bildbearbeitungseinheit 102 verbundenen Projektionseinheit 104, wobei die Bilddatenverarbeitungseinheit 102 abhängig von der erfassten Umgebungshelligkeit $H(t)$ für die Erzeugung der Bilddaten $BD2(t)$ aus den Bilddaten $BD1(t)$ eine Gradationskurve GK, derart vorgibt, so dass dunkle Bildbereiche in den Bilddaten $BD2(t)$ gegenüber den Bilddaten $BD1(t)$ aufgehellt sind, wobei ein Maß der Aufhellung der dunklen Bildbereiche in den Bilddaten $BD2(t)$ mit zunehmender Umgebungshelligkeit $H(t)$ steigt.

**Patentansprüche**

1. Vorrichtung zur Projektion von Bilddaten auf eine Projektionsfläche einer Fahrzeugscheibe eines Fahrzeugs, umfassend:

   - eine Schnittstelle (101) zur Bereitstellung der Bilddaten $BD1(t)$,
   - eine mit der Schnittstelle (101) verbundene Bilddatenbearbeitungseinheit (102) zur Erzeugung von Bilddaten $BD2(t)$ aus den Bilddaten $BD1(t)$,
   - einen mit der Bilddatenbearbeitungseinheit (102) verbundenen Helligkeitssensor (103) zur Erfassung einer Umgebungshelligkeit $H(t)$, und
   - eine mit der Bilddatenbearbeitungseinheit (102) verbundene Projektionseinheit (104) zur Projektion der Bilddaten $BD2(t)$ auf die Projektionsfläche der Fahrzeugscheibe,

   **dadurch gekennzeichnet, dass**
   die Bilddatenverarbeitungseinheit (102) derart ausgeführt und eingerichtet ist, dass abhängig von der erfassten Umgebungshelligkeit $H(t)$ für die Erzeugung der Bilddaten $BD2(t)$ aus den Bilddaten $BD1(t)$ eine Gradationskurve $GK(H(t))$ derart vorgegeben wird, dass dunkle, unterhalb eines vorgegebenen Farbhelligkeitsgrenzwerts im Vergleich zu oberhalb des Farbhelligkeitsgrenzwerts liegenden Bildbereichen in den Bilddaten $BD2(t)$ gegenüber den Bilddaten $BD1(t)$ bezüglich ihrer Farb- oder Graustufenspektren aufgehellt sind, wobei ein Maß der Aufhellung der dunklen Bildbereiche in den Bilddaten $BD2(t)$ mit zunehmender Umgebungshelligkeit $H(t)$ steigt.

**2.** Vorrichtung nach Anspruch 1
weiterhin umfassend ein mit der Bilddatenbearbeitungseinheit (102) verbundenes System (105) zur Erkennung eines aktuellen Blickwinkelbereichs BWB(t) zumindest eines Insassen des Fahrzeugs, wobei die Bilddatenverarbeitungseinheit (102) derart ausgeführt und eingerichtet ist, dass nur diejenigen dunklen Bildbereiche in den Bilddaten BD2(t) aufgehellt werden, welche bei ihrer Projektion auf die Projektionsfläche der Fahrzeugscheibe im Blickwinkelbereich BWB(t) liegen.

**3.** Vorrichtung nach einem der Ansprüche 1 bis 2,
bei der der Helligkeitssensor (103) einen Erfassungsbereich hat, der eine Helligkeit H(t) im Wesentlichen einer für einen Insassen durch die Projektionsfläche hindurch wahrnehmbaren Umgebung des Fahrzeugs erfasst.

**4.** Vorrichtung nach einem der Ansprüche 1 bis 3,
bei der die Bilddatenverarbeitungseinheit (102) derart ausgeführt und eingerichtet ist, dass bei einer Änderung $\Delta H(t)$ der ermittelten Umgebungshelligkeit H(t) eine Aufhellung der dunklen Bildbereiche in den Bilddaten BD2(t) mit einer von $\Delta H(t)$ abhängigen vorgegebenen Zeitverzögerung $\Delta t(\Delta H(t))$ erfolgt.

**5.** Vorrichtung nach einem der Ansprüche 1 bis 4,
bei der die Bilddatenverarbeitungseinheit (102) derart ausgeführt und eingerichtet ist, dass bei einer Änderung $\Delta H(t)$ der ermittelten Umgebungshelligkeit H(t) eine Änderung der Aufhellung der dunklen Bildbereiche in den Bilddaten BD2(t) gemäß einer vorgegeben stetigen Funktion HYS(t) erfolgt.

**6.** Vorrichtung nach Anspruch 5,
bei der die stetige Funktion HYS(t) abhängig vom Vorzeichen der Änderung $\Delta H(t)$ der Helligkeit H(t) ist, wobei sich bei einem positiven $\Delta H(t)$ die Aufhellung der dunklen Bildbereiche gemäß einer vorgegeben Funktion HYS1(t) ändert und bei einem negativen $\Delta H(t)$ die Aufhellung der dunklen Bildbereiche gemäß einer vorgegeben Funktion HYS2(t) ändert.

**7.** Vorrichtung nach einem der Ansprüche 5 oder 6,
bei der die Funktion HYS(t) ein Hysterese-Verhalten abbildet.

**8.** Fahrzeug, insbesondere Straßenfahrzeug, Schienenfahrzeug, Wasserfahrzeug, Luftfahrzeug, mit einer Vorrichtung nach einem der Ansprüche 1 bis 4.

**9.** Verfahren zum Betrieb einer Vorrichtung zur Projektion von Bilddaten auf eine Projektionsfläche einer Fahrzeugscheibe eines Fahrzeugs, mit folgenden Schritten:

- Bereitstellen (201) von Bilddaten BD1(t) an einer Schnittstelle (101),
- Erfassen (202) einer Umgebungshelligkeit H(t) mit einem Helligkeitssensor (103),
- Erzeugen (203) von Bilddaten BD2(t) aus den Bilddaten BD1(t) mittels einer mit der Schnittstelle (101) verbundenen Bilddatenbearbeitungseinheit (102) und,
- Projizieren (204) der Bilddaten BD2(t) auf die Projektionsfläche der Fahrzeugsscheibe mittels einer mit der Bildbearbeitungseinheit (102) verbundenen Projektionseinheit (104),

**dadurch gekennzeichnet, dass**
die Bilddatenverarbeitungseinheit (102) abhängig von der erfassten Umgebungshelligkeit H(t) für die Erzeugung der Bilddaten BD2(t) aus den Bilddaten BD1(t) eine Gradationskurve GK(H(t)) derart vorgibt, dass dunkle, unterhalb eines vorgegebenen Farbhelligkeitsgrenzwerts im Vergleich zu oberhalb des Farbhelligkeitsgrenzwerts liegenden Bildbereichen in den Bilddaten BD2(t) gegenüber den Bilddaten BD1(t) bezüglich ihrer Farb- oder Graustufenspektren aufgehellt sind, wobei ein Maß der Aufhellung der dunklen Bildbereiche in den Bilddaten BD2(t) mit zunehmender Umgebungshelligkeit H(t) steigt.

**10.** Verfahren nach Anspruch 9,
mit dem Schritt: Ermitteln eines aktuellen Blickwinkelbereichs BWB(t) zumindest eines Insassen des Fahrzeugs durch ein mit der Bilddatenbearbeitungseinheit (102) verbundenes System (105), wobei die Bilddatenverarbeitungseinheit (102) nur diejenigen dunklen Bildbereiche in den Bilddaten BD2(t) aufgehellt, welche bei ihrer Projektion auf die Projektionsfläche der Fahrzeugscheibe im Blickwinkelbereich BWB(t) liegen.

**Claims**

1. Device for projecting image data onto a projection surface of a vehicle window of a vehicle, the device comprising:

     - an interface (101) for providing the image data BD1(t),
     - an image data processing unit (102), connected to the interface (101), for generating image data BD2(t) from the image data BD1(t),
     - a brightness sensor (103), connected to the image data processing unit (102), for detecting an ambient brightness H(t), and
     - a projection unit (104), connected to the image data processing unit (102), for projecting the image data BD2(t) onto the projection surface of the vehicle window,

   **characterized in that**
   the image data processing unit (102) is designed and configured such that, depending on the detected ambient brightness H(t), for generating the image data BD2(t) from the image data BD1(t), a gradation curve GK(H(t)) is specified in such a way that dark image regions in the image data BD2(t), which regions are below a specified color brightness limit value compared to image regions above the color brightness limit value, are brightened with respect to their color spectra or grayscale spectra compared to image data BD1(t), a degree of brightening of the dark image regions in the image data BD2(t) increasing with increasing ambient brightness H(t).

2. Device according to claim 1,
   further comprising a system (105), connected to the image data processing unit (102), for detecting a current viewing angle range BWB(t) of at least one occupant of the vehicle, wherein the image data processing unit (102) is designed and configured such that only those dark image regions in the image data BD2(t) are brightened which are within the viewing angle range BWB(t) when projected onto the projection surface of the vehicle window.

3. Device according to either claim 1 or claim 2,
   in which the brightness sensor (103) has a detection range which detects a brightness H(t) substantially of an environment of the vehicle which can be perceived by an occupant through the projection surface.

4. Device according to any of claims 1 to 3,
   in which the image data processing unit (102) is designed and configured such that, in the event of a change ΔH(t) in the determined ambient brightness H(t), the dark image regions in the image data BD2(t) are brightened with a specified time delay Δt(ΔH(t)) dependent on ΔH(t).

5. Device according to any of claims 1 to 4,
   in which the image data processing unit (102) is designed and configured such that a change ΔH(t) in the determined ambient brightness H(t) results in a change in the brightening of the dark image regions in the image data BD2(t) according to a specified continuous function HYS(t).

6. Device according to claim 5,
   in which the continuous function HYS(t) is dependent on the sign of the change ΔH(t) in the brightness H(t), wherein in the case of a positive ΔH(t) the brightening of the dark image regions changes according to a specified function HYS1(t) and in the case of a negative ΔH(t) the brightening of the dark image regions changes according to a specified function HYS2(t).

7. Device according to either claim 5 or claim 6,
   in which the function HYS(t) represents a hysteresis behavior.

8. Vehicle, in particular road vehicle, rail vehicle, watercraft, aircraft, comprising a device according to any of claims 1 to 4.

9. Method for operating a device for projecting image data onto a projection surface of a vehicle window of a vehicle, the method comprising the following steps:

     - providing (201) image data BD1(t) at an interface (101),
     - detecting (202) an ambient brightness H(t) by means of a brightness sensor (103),
     - generating (203) image data BD2(t) from the image data BD1(t) by means of an image data processing unit (102)

connected to the interface (101) and,
- projecting (204) the image data BD2(t) onto the projection surface of the vehicle window by means of a projection unit (104) connected to the image processing unit (102),

**characterized in that**
the image data processing unit (102) specifies, depending on the detected ambient brightness H(t), for generating the image data BD2(t) from the image data BD1(t), a gradation curve GK(H(t)) in such a way that dark image regions in the image data BD2(t), which regions are below a specified color brightness limit value compared to image regions above the color brightness limit value, are brightened with respect to their color spectra or grayscale spectra compared to image data BD1(t), a degree of brightening of the dark image regions in the image data BD2(t) increasing with increasing ambient brightness H(t).

10. Method according to claim 9,
comprising the step of: determining a current viewing angle range BWB(t) of at least one occupant of the vehicle by means of a system (105) connected to the image data processing unit (102), wherein the image data processing unit (102) only brightens those dark image regions in the image data BD2(t) which are within the viewing angle range BWB(t) when projected onto the projection surface of the vehicle window.

**Revendications**

1. Dispositif pour la projection de données d'image sur une surface de projection d'une vitre de véhicule d'un véhicule, comprenant :

    - une interface (101) pour la fourniture des données d'image BD1(t),
    - une unité de traitement de données d'image (102) connectée à l'interface (101) et permettant de générer des données d'image BD2(t) à partir des données d'image BD1(t),
    - un capteur de luminosité (103) connecté à l'unité de traitement de données d'image (102) et permettant de détecter une luminosité ambiante H(t), et
    - une unité de projection (104) connectée à l'unité de traitement de données d'image (102) et permettant de projeter les données d'image BD2(t) sur la surface de projection de la vitre de véhicule,

    **caractérisé en ce que**
    l'unité de traitement de données d'image (102) est réalisée et configurée de telle sorte qu'en fonction de la luminosité ambiante H(t) détectée, une courbe de gradation GK(H(t)) est prédéfinie pour la génération des données d'image BD2(t) à partir des données d'image BD1(t) de telle sorte que des zones d'image sombres, situées en dessous d'une valeur limite de luminosité de couleur prédéfinie par comparaison avec des zones d'image situées au-dessus de la valeur limite de luminosité de couleur, sont éclaircies dans les données d'image BD2(t) par rapport aux données d'image BD1(t) en ce qui concerne leurs spectres de couleurs ou de niveaux de gris, dans lequel une mesure de l'éclaircissement des zones d'image sombres dans les données d'image BD2(t) augmente avec l'augmentation de la luminosité ambiante H(t).

2. Dispositif selon la revendication 1
comprenant en outre un système (105) connecté à l'unité de traitement de données d'image (102) et permettant de reconnaître une zone d'angle de vision BWB(t) actuelle d'au moins un occupant du véhicule, dans lequel l'unité de traitement de données d'image (102) est réalisée et configurée de telle sorte que seules les zones d'image sombres dans les données d'image BD2(t) qui se trouvent dans la zone d'angle de vision BWB(t) lors de leur projection sur la surface de projection de la vitre de véhicule sont éclaircies.

3. Dispositif selon l'une des revendications 1 à 2,
dans lequel le capteur de luminosité (103) possède une zone de détection qui détecte une luminosité H(t) sensiblement d'un environnement du véhicule perceptible par un occupant au moyen de la surface de projection.

4. Dispositif selon l'une des revendications 1 à 3,
dans lequel l'unité de traitement de données d'image (102) est réalisée et configurée de telle sorte que, lors d'une modification ΔH(t) de la luminosité ambiante H(t) déterminée, un éclaircissement des zones d'image sombres dans les données d'image BD2(t) est effectué avec un retard temporel Δt(ΔH(t)) prédéfini dépendant de ΔH(t)).

**5.** Dispositif selon l'une des revendications 1 à 4,
dans lequel l'unité de traitement de données d'image (102) est réalisée et configurée de telle sorte que, lors d'une modification ∆H(t) de la luminosité ambiante H(t) déterminée, une modification de l'éclaircissement des zones d'image sombres dans les données d'image BD2(t) est effectuée selon une fonction continue HYS(t) prédéfinie.

**6.** Dispositif selon la revendication 5,
dans lequel la fonction continue HYS(t) dépend du signe de la modification ∆H(t) de la luminosité H(t), dans lequel l'éclaircissement des zones d'image sombres est modifié selon une fonction HYS1(t) prédéfinie dans le cas où ∆H(t) est positive et l'éclaircissement des zones d'image sombres est modifié selon une fonction HYS2(t) prédéfinie dans le cas où ∆H(t) est négative.

**7.** Dispositif selon l'une des revendications 5 ou 6,
dans lequel la fonction HYS(t) reproduit un comportement d'hystérésis.

**8.** Véhicule, en particulier véhicule routier, véhicule ferroviaire, bateau, aéronef, comportant un dispositif selon l'une des revendications 1 à 4.

**9.** Procédé permettant de faire fonctionner un dispositif pour la projection de données d'image sur une surface de projection d'une vitre de véhicule d'un véhicule, comportant les étapes suivantes :

- fourniture (201) de données d'image BD1(t) à une interface (101),
- détection (202) d'une luminosité ambiante H(t) avec un capteur de luminosité (103),
- génération (203) de données d'image BD2(t) à partir des données d'image BD1(t) au moyen d'une unité de traitement de données d'image (102) connectée à l'interface (101) et,
- projection (204) des données d'image BD2(t) sur la surface de projection de la vitre de véhicule au moyen d'une unité de projection (104) connectée à l'unité de traitement d'image (102),

**caractérisé en ce que**
l'unité de traitement de données d'image (102) prédéfinit, en fonction de la luminosité ambiante H(t) détectée, une courbe de gradation GK(H(t)) pour la génération des données d'image BD2(t) à partir des données d'image BD1(t), de telle sorte que des zones d'image sombres, situées en dessous d'une valeur limite de luminosité de couleur prédéfinie par comparaison avec des zones d'image situées au-dessus de la valeur limite de luminosité de couleur, sont éclaircies dans les données d'image BD2(t) par rapport aux données d'image BD1(t) en ce qui concerne leurs spectres de couleurs ou de niveaux de gris, dans lequel une mesure de l'éclaircissement des zones d'image sombres dans les données d'image BD2(t) augmente avec l'augmentation de la luminosité ambiante H(t).

**10.** Procédé selon la revendication 9,
comportant l'étape consistant à : déterminer une zone d'angle de vision BWB(t) actuelle d'au moins un occupant du véhicule par un système (105) connecté à l'unité de traitement de données d'image (102), dans lequel l'unité de traitement de données d'image (102) n'éclaircit dans les données d'image BD2(t) que les zones d'image sombres qui se trouvent dans la zone d'angle de vision BWB(t) lors de leur projection sur la surface de projection de la vitre de véhicule.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006050016 A1
- DE 102016223908 A1